**Europäisches Patentamt**

**European Patent Office**

**Office européen des brevets**

(11) Numéro de publication: **0 001 194**
**B1**

(12) **FASCICULE DE BREVET EUROPEEN**

(45) Date de publication du fascicule de brevet:
14.01.81

(51) Int. Cl.³: **B 65 G 17/08, G 04 D 1/00**

(21) Numéro de dépôt: **78400086.1**

(22) Date de dépôt: **31.08.78**

(54) Système d'articulation pour chaîne de transport de pièces et chaîne utilisant ledit système d'articulation.

(30) Priorité: **09.09.77 FR 7727303**

(43) Date de publication de la demande:
**21.03.79 Bulletin 79/6**

(45) Mention de la délivrance du brevet:
**14.01.81 Bulletin 81/2**

(84) Etats contractants désignés:
**BE CH DE GB LU NL SE**

(56) Documents cités:
**DE-C-222 545**
**FR-A-1 450 731**
**FR-A-1 541 697**
**GB-A-572 604**

(73) Titulaire: **SORMEL Société anonyme dite:, Rue Becquerel Z.I. de Chateaufarine, F-25009 Besançon (FR)**

(72) Inventeur: **Petiteau, Maurice René, 7 rue Sancey, F-25000 Besançon (FR)**

(74) Mandataire: **Bonnetat, Christian, Cabinet PROPI Conseils 23 rue de Léningrad, F-75008 Paris (FR)**

Système d'articulation pour chaîne de transport de pièces et chaîne utilisant
ledit système d'articulation.

Dans le FR-A-1 541 697, on a décrit une chaîne de transport de pièces comportant des plaques, propres à porter chacune au moins une platine de montre et articulées les unes aux autres au moyen d'articulations à base de rotules. De telles articulations sont onéreuses, notamment du fait qu'elles nécessitent l'usinage et la concordance de portées desdites rotules dans deux plaques parallèles, diamétralement opposées.

Par ailleurs, le GB-A-572 604 décrit une chaîne à galets, telle que deux galets consécutifs sont tourillonnés entre les branches d'éléments en forme de U, opposés par leurs dos et reliés l'un à l'autre de façon définitive par l'intermédiaire d'un axe de rotation, transversal auxdits dos et autour duquel lesdits éléments peuvent librement tourner.

La présente invention a pour objet un système d'articulation pour une chaîne de transport de pièces, ce système d'articulation étant prévu pour être monté et démonté facilement, en vue de l'échange, de la suppression ou de l'addition de maillons de la chaîne. Le système d'articulation selon l'invention, tout en présentant une structure simple ne nécessitant pas d'usinages précis et donc onéreux, permet à deux maillons consécutifs d'occuper des positions quelconques l'un par rapport à l'autre dans des plans différents, tout en offrant la possibilité d'une giration à plat lorsque les maillons sont disposés dans le même plan.

A cette fin, selon l'invention, le système pour l'articulation de deux maillons consécutifs d'une chaîne, notamment pour les maillons porteurs de pièces d'une chaîne d'un dispositif de transport de pièces entre des postes de travail différents, comportant deux étriers principaux, au moins sensiblement en forme de U, opposés par leur dos et pouvant tourner l'un par rapport à l'autre autour d'un premier axe de rotation, transversal auxdits dos, lesdits étriers principaux étant à cet effet reliés par un téton pourvu d'une tête à l'une de ses extrémités et traversant une ouverture du dos du premier desdits étriers principaux, de façon que ladite tête vienne reposer sur le bord de ladite ouverture, est caractérisé en ce que, à son extrémité opposée à la tête, le téton comporte des rainures transversales parallèles et opposées pour permettre l'introduction de la partie correspondante rétrécie dudit téton dans une fente prévue dans le second étrier principal, fente qui débouche dans un bord libre du dos de celui-ci et en ce que l'on prévoit des moyens élastiques tendant à écarter les deux étriers principaux l'un de l'autre.

Ainsi, il est facile de solidariser et/ou de désolidariser deux maillons consécutifs l'un de l'autre, en vue d'une modification de ladite chaîne.

Avantageusement, la face intérieure du dos du second étrier principal peut comporter l'empreinte des faces des rainures du téton qui viennent s'appliquer contre elle. Ainsi, cette empreinte sert de logement auxdites faces.

Le système d'articulation peut comporter par ailleurs, au moins un étrier auxiliaire, également en forme au moins approximative de U, monté entre les branches de l'un des étriers principaux par l'intermédiaire d'un second axe de rotation au moins sensiblement orthogonal au premier et autour duquel peut librement tourner ledit étrier auxiliaire, les branches de ce dernier occupant une position tournée de 90° par rapport à celles de l'étrier principal qui le porte, chaque maillon étant relié à l'étrier principal et/ou auxiliaire en regard par l'intermédiaire d'un axe de pivotement monté entre les branches dudit étrier principal et/ou auxiliaire.

Ainsi, la chaîne peut suivre tout trajet désiré et même virer à plat.

Afin d'obtenir des positions marquées dans la rotation des deux étriers principaux l'un par rapport à l'autre, autour dudit premier axe de rotation, il est avantageux que la tête dudit premier axe de rotation et le bord de l'ouverture soient pourvus d'un jeu de saillies et d'encoches complémentaires et coopérantes.

Les figures du dessin annexé feront bien comprendre comment l'invention peut être réalisée.

La figure 1 est une vue en perspective d'un mode de réalisation du système d'articulation selon l'invention.

La figure 2 est une vue, également en perspective, d'une variante de réalisation du système d'articulation selon l'invention.

La figure 3 est une vue en perspective éclatée du système de la figure 2.

Les figures 4 et 5 illustrent schématiquement les positions relatives que les maillons d'une chaîne peuvent prendre les uns par rapport aux autres, grâce au système d'articulation selon l'invention.

Les figures 6 à 9 illustrent schématiquement des applications d'une chaîne de transport équipée de système d'articulation selon l'invention.

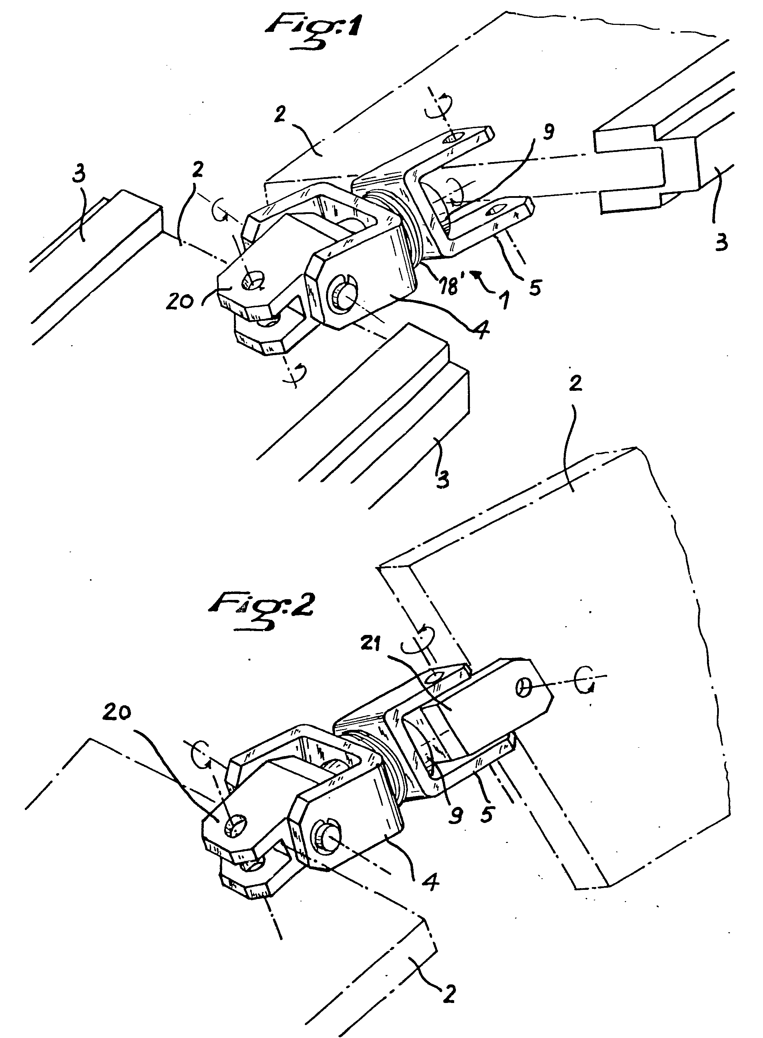

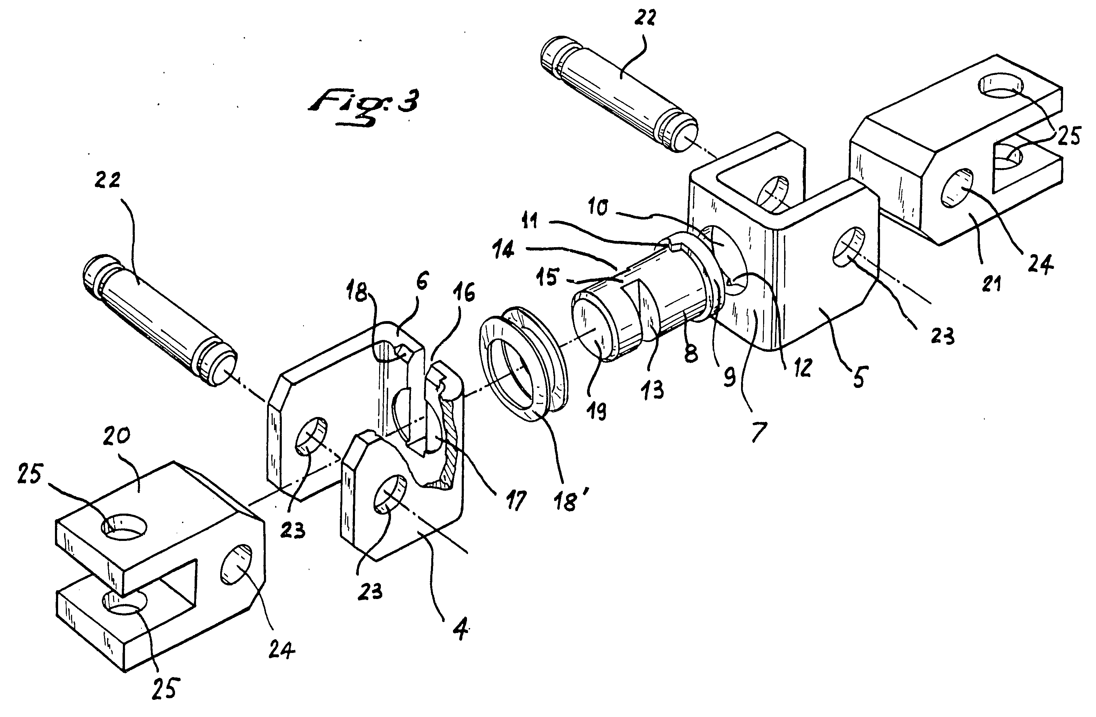

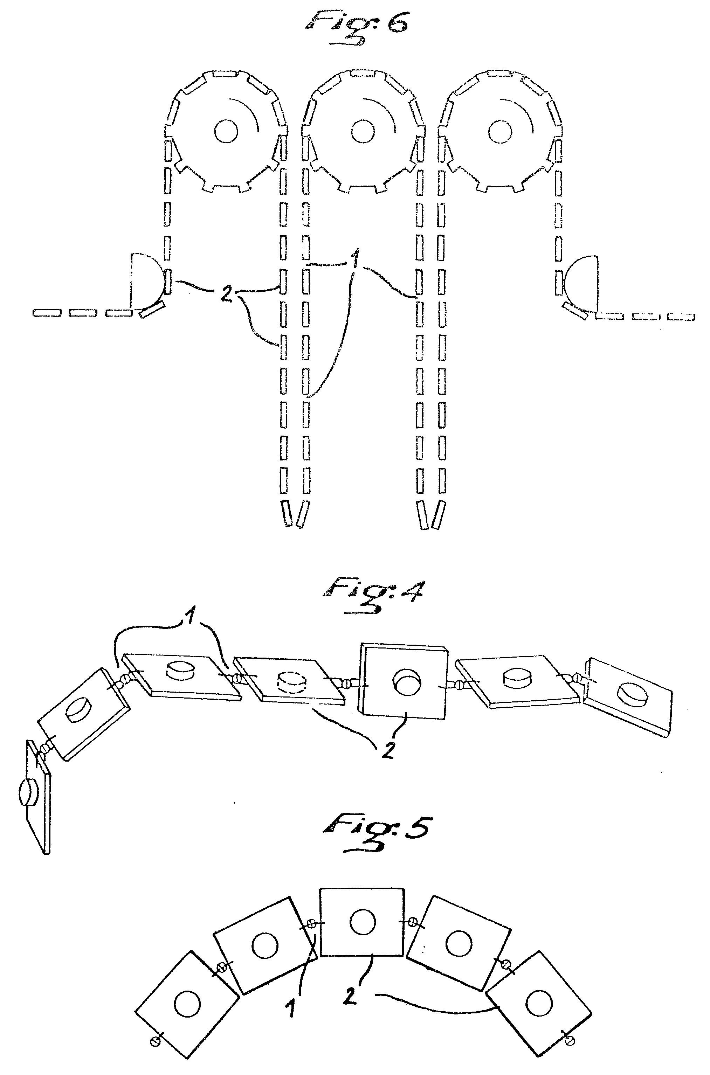

Les modes de réalisation du système d'articulation 1 selon l'invention, montrés par les figures 1 à 3, sont plus particulièrement destinés à assurer une liaison articulée entre des maillons de chaîne, constitués par des plaques rigides 2, par exemple en acier, pourvues de patins latéraux de glissement 3, par exemple en matière synthétique. A des fins de simplification de dessin, certains patins 3 n'ont pas été représentés sur les figures 1 et 2.

Comme le montrent les figures 1 à 3, le système 1, pour l'articulation de deux maillons consécutifs d'une chaîne selon l'invention, comporte deux étriers principaux 4 et 5, au moins sensiblement en forme de U, opposés par leurs dos 6 et 7 et reliés l'un à l'autre par l'intermédiaire d'un téton transversal 8, dont l'axe forme le »premier axe de rotation« mentionné ci-dessus. A cet effet, le téton 8 comporte une tête 9, tandis que le dos 7 de l'étrier 5 comporte une ouverture 10 contre le bord interne de laquelle peut venir s'appuyer la tête 9. Pour permettre le marquage en position de la tête 9 par rapport à l'étrier 5, cette tête 9 peut comporter des saillies triangulaires 11 susceptibles de coopérer avec des encoches 12 de même forme, prévue dans le bord interne de ladite ouverture 10. Par ailleurs, à son extrémité opposée à la tête 9, le téton 8 comporte deux rainures transversales parallèles et opposées 13 et 14, délimitant dans ledit téton une partie rétrécie 15. Pour recevoir cette partie rétrécie 15, l'étrier 4 comporte une fente 16 dans laquelle ladite partie rétrécie 15 peut coulisser.

Par ailleurs, dans sa face intérieure, le dos 6 de l'étrier 4 comporte une empreinte 17 correspondant à la forme des faces des rainures 13 et 14 venant s'appliquer contre la face intérieure dudit dos 6. Un chanfrein 18 est prévu pour faciliter l'introduction de la partie rétrécie 15 dans la fente 16. De plus, des rondelles élastiques 18' sont montées sur le téton 8, entre les étriers 4 et 5 de façon à exercer une action tendant à écarter ceux-ci, c'est-à-dire à appliquer la partie d'extrémité 19 du téton 8 contre l'empreinte 17. On voit ainsi que, grâce à cette disposition, il est particulièrement aisé de monter et de démonter les étriers 4 et 5 l'un par rapport à l'autre et de les maintenir verrouillés en position de fonctionnement.

Dans au moins l'un des étriers 4 ou 5 peut être monté un étrier auxiliaire 20 ou 21, également en forme approximative de U, dont les branches sont tournées de 90° par rapport à celles de l'étrier principal qui le forme. Le montage d'un étrier auxiliaire 20 ou 21 par rapport à l'étrier principal 4 ou 5 qui le porte est réalisé au moyen d'axes 22 traversant les branches opposées des étriers 4 ou 5 par des ouvertures 23 et traversant les étriers 20 et 21 par les ouvertures 24, parallèles aux branches desdits étriers ainsi qu'à leur dos.

Dans les branches des étriers 20 et 21 sont prévus des trous en regard 25 permettant d'y faire passer des axes (non représentés) traversant les plaques 2 adjacentes. La différence entre les modes de réalisation des figures 1 et 2 réside en ce que, dans le dispositif de la figure 1, n'est prévu qu'un étrier 20 alors que dans le dispositif de la figure 2 sont prévus un étrier 20 et un étrier 21.

Dans le système selon l'invention, les étriers 4 et 5 peuvent tourner librement l'un par rapport à l'autre, grâce au téton 8, tandis que chaque étrier 20 et 21 peut tourner librement par rapport à un étrier 4 ou 5, autour des axes 22 et que les plaques 2 et 3 peuvent tourner librement autour des axes traversant les trous 25 des branches des étriers 20 et 21.

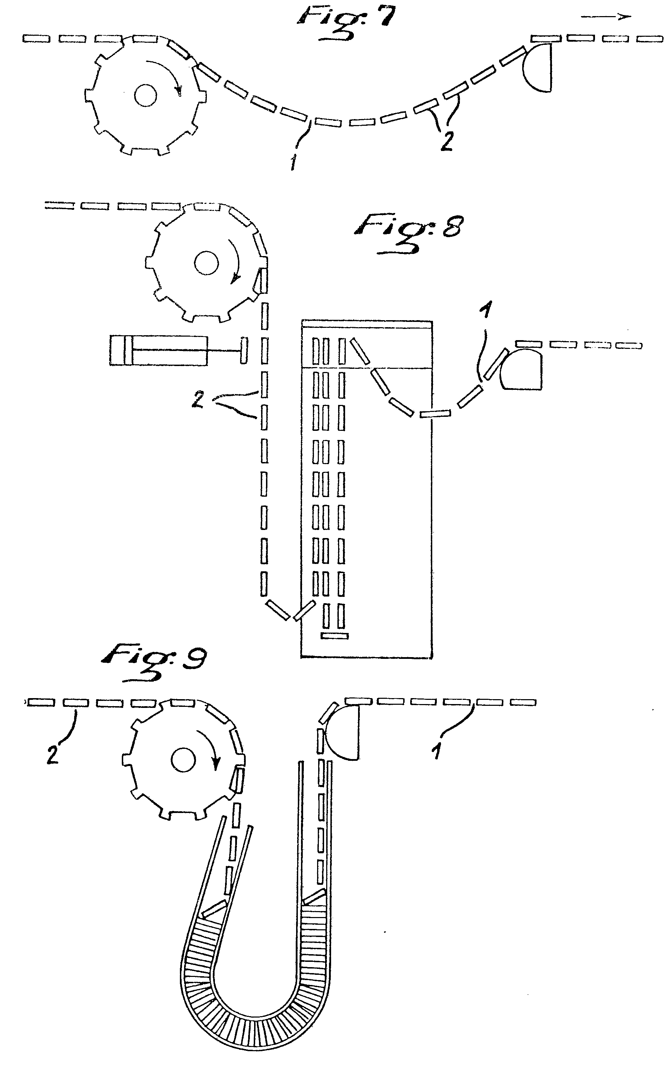

Ainsi, comme l'illustre schématiquement la figure 4, des maillons consécutifs d'une chaîne constituée de plaques 2 articulées par le système selon l'invention peuvent prendre des positions quelconques les unes par rapport aux autres, dans des plans différents.

Par ailleurs, comme l'illustre schématiquement la figure 5, les maillons 2 peuvent tourner à plat dans un même plan.

Les figures 6 à 9 illustrent des portions de chaînes constituées de plaques articulées par le système selon l'invention et formant des magasins entre deux postes de travail. Par exemple, la figure 6 montre un magasin du type accordéon dans lequel des portions de chaîne forment des zigzags. La figure 7 illustre une portion de chaîne servant d'éléments tampons entre deux postes. La figure 8 illustre un magasin dans lequel des brins de chaîne sont repliés en zigzag de manière à former une sorte de rideau. La figure 9 illustre un dispositif de stockage d'une portion de chaîne selon l'invention, les maillons de celle-ci étant stockés les uns contre les autres après repliement en zigzag.

On voit ainsi que, grâce au dispositif selon l'invention, on obtient un système d'articulation permettant tous les mouvements désirés entre les maillons consécutifs et facilement démontable. De plus, grâce aux degrés de liberté permis par le système d'articulation selon l'invention dans l'articulation entre les maillons consécutifs, la chaîne présente une grande souplesse aussi bien longitudinale que transversale, qui permet le centrage précis individuel de chacun des maillons par rapport au système d'entraînement de la chaîne.

Par ailleurs, on remarquera que le système d'articulation ne peut être démonté tant qu'il est sous tension. Le démontage s'effectue facilement par compression des rondelles élastiques 18', puis coulissement de la partie rétrécie 15 dans la fente correspondante 16.

## Revendications

1. Système pour l'articulation de deux maillons consécutifs (2) d'une chaîne, notamment pour les maillons porteurs de pièces d'une chaîne d'un dispositif de transport de pièces entre des postes de travail différents, comportant deux étriers principaux (4, 5), au moins sensiblement en forme de U, opposés par leurs dos (6, 7) et pouvant tourner l'un par rapport à l'autre autour d'un premier axe de rotation transversal auxdits dos, lesdits étriers principaux (4, 5) étant à cet effet reliés par un téton (8) pourvu d'une tête (9) à l'une de ses extrémités et traversant une ouverture (10) du dos du premier (5) desdits étriers principaux, de façon que ladite tête vienne reposer sur le bord de ladite ouverture, caractérisé en ce que, à son extrémité opposée à la tête (9) le téton (8) comporte des rainures (13, 14) transversales, parallèles et opposées pour permettre l'introduction de la partie correspondante rétrécie (15) dudit téton dans une fente (16) prévue dans le second étrier principal (4), fente qui débouche dans un bord libre du dos de celui-ci et en ce que l'on prévoit des moyens élastiques (18') tendant à écarter les deux étriers principaux (4, 5) l'un de l'autre.

2. Système selon la revendication 1, caractérisé en ce que la face intérieure du dos (6) du second étrier principal (4) comporte l'empreinte (17) des faces des rainures (13, 14) du téton (8) qui viennent s'appliquer contre elle.

3. Système selon l'une des revendications 1 ou 2, caractérisé en ce qu'il comporte, par ailleurs, au moins un étrier auxiliaire (20, 21) également en forme au moins approximative de U, monté entre les branches de l'un des étriers principaux par l'intermédiaire d'un second axe de rotation (22) au moins sensiblement orthogonal au premier et autour duquel peut librement tourner ledit étrier auxiliaire, les branches de ce dernier occupant une position tournée de 90° par rapport à celles de l'étrier principal qui le porte, chaque maillon (2) étant relié à l'étrier principal et/ou auxiliaire en regard par l'intermédiaire d'un axe de pivotement monté entre les branches dudit étrier principal et/ou auxiliaire.

4. Système selon l'une des revendications 1 à 3, caractérisé en ce que la tête (9) dutit téton (8) et le bord de l'ouverture sont pourvus d'un jeu de saillies (11) et d'encoches (12) complémentaires et coopérantes.

5. Dispositif de transport de chaîne, caractérisé en ce que les maillons de ladite chaîne comportent un système d'articulation spécifié sous l'une quelconque des revendications 1 à 4.

## Patentansprüche

1. System für die Gelenkverbindung von zwei aufeinanderfolgenden Kettengliedern (2) einer Kette, besonders für die Werkstück-Traggglieder einer Kette einer Transportvorrichtung von Werkstücken zwischen verschiedenen Arbeitsstellen, bestehend aus zwei zumindest im wesentlichen U-förmigen Hauptbügeln (4, 5), die einander mit ihren Rückenteilen (6, 7) gegenüberliegen und sich in Bezug aufeinander um eine erste quer zu diesen Rückenteilen liegende Drehachse drehen können, wobei die Hauptbügel (4, 5) zu diesem Zweck mit einem Zapfen (8) verbunden sind, der an einem Ende mit einem Kopfteil (9) versehen ist und so durch eine Öffnung (10) des Rückenteils des ersten Hauptbügels (5) dringt, daß das Kopfteil auf dem Rand der Öffnung liegt, dadurch gekennzeichnet, daß der Zapfen (8) an seinem dem Kopfteil (9) gegenüberliegenden Ende mit parallelen und einander gegenüberliegenden Quernuten (13, 14) versehen ist zum Einfügen des entsprechenden verjüngten Zapfenteils (15) in einen am zweiten Hauptbügel (4) vorgesehenen Einschnitt (16), welcher in einem freien Rand des Rückenteils dieses Hauptbügels mündet, und daß elastische Mittel (18') vorgesehen sind, die die beiden Hauptbügel (4, 5) voneinander entfernt halten sollen.

2. System nach Anspruch 1, dadurch gekennzeichnet, daß die Innenseite des Rückenteils (6) des zweiten Hauptbügels (4) einen Abdruck (17) der Seiten der Zapfennuten (13, 14) aufweist, welche darauf treffen.

3. System nach einem der Ansprüche 1 oder 2, dadurch gekennzeichnet, daß es außerdem mit mindestens einem Hilfsbügel (20, 21) versehen ist, welcher auch zumindest annähernd U-förmig ist und zwischen den Schenkeln des einen Hauptbügels (5) angebracht ist, und zwar über eine zweite fast senkrecht zur ersten Drehachse stehenden Drehachse (22), um welche sich dieser Hilfsbügel frei drehen kann, wobei die Schenkel des letzteren eine in bezug auf die Schenkel des ihn tragenden Hauptbügels um 90° gedrehte Stellung einnehmen, wobei jedes Kettenglied (2) über eine zwischen den Schenkeln des Haupt- bzw. Hilfsbügels angebrachten Schwenkachse mit dem Haupt- bzw. dem gegenüberliegenden Hilfsbügel verbunden ist.

4. System nach einem der Ansprüche 1 bis 3, dadurch gekennzeichnet, daß das Kopfteil (9) des Zapfens (8) und der Rand der Öffnung mit einem Satz sich ergänzender und zusammenwirkender Vorsprünge (11) und Einkerbungen (12) versehen sind.

5. Kettentransportvorrichtung, dadurch gekennzeichnet, daß die Kettenglieder dieser Kette ein unter irgendeinem der Ansprüche 1 bis 4 aufgeführtes Gelenkverbindungssystem aufweisen.

## Claims

1. System for the articulation of two consecutive links (2) of a chain, particularly for the links carrying workpieces of a chain of a device conveying workpieces between different work stations, comprising two main stirrup pieces (4, 5), at least substantially in U-form, their backs (6, 7) opposite each other and being able to rotate with respect to each other about a first axis of rotation transverse with respect to said backs, said main stirrup pieces (4, 5) being to this end connected by a lug (8) provided with a head (9) at one of its ends and passing through an opening (10) in the back of the first (5) of said main stirrups, so that said head rests on the edge of said opening, characterised in that, at its end opposite the head (9), the lug (8) comprises transverse, parallel and opposite grooves (13, 14) to allow the introduction of the corresponding narrowed part (15) of the said lug in a slot (16) provided in the second main stirrup piece (4), which slot opens in a free edge of the back of the latter and in that elastic means (18') are provided, tending to separate the two main stirrup pieces (4, 5) from each other.

2. System according to Claim 1, characterised in that the inner face of the back (6) of the second main stirrup (4) comprises the impression (17) of the faces of the grooves (13, 14) of the lug (8) which are applied thereagainst.

3. System according to one of Claims 1 or 2,

characterised in that it further comprises at least one auxiliary stirrup (20, 21) likewise approximately in the form of a U, mounted between the arms of one of the main stirrups via a second axis of rotation (22) at least substantially at right angles to the first and about which said auxiliary stirrup may freely rotate, the arms of the latter occupying a position turned through 90° with respect to those of the main stirrup which bears it, each link (2) being connected to the main and/or auxiliary stirrup opposite via a pivoting pin mounted between the arms of said main and/or auxiliary stirrup.

4. System according to one of Claims 1 to 3, characterised in that the head (9) of said lug (8) and the edge of the opening are provided with a set of projections (11) and notches (12) which are complementary and cooperating.

5. Device for conveying chain, characterised in that the links of said chain comprise a system of articulation specified in any one of Claims 1 to 4.

Fig.1

Fig.2

Fig. 3

6

0 001 194

0 001 194

*Fig: 6*

*Fig: 4*

*Fig: 5*

0 001 194

*Fig. 7*

*Fig. 8*

*Fig. 9*

13